Europäisches Patentamt

(19) European Patent Office

Office européen des brevets

(11) Numéro de publication: **0 121 448**

**B1**

(12) **FASCICULE DE BREVET EUROPÉEN**

(45) Date de publication du fascicule du brevet:
26.11.86

(21) Numéro de dépôt: **84400321.0**

(22) Date de dépôt: **16.02.84**

(51) Int. Cl.⁴: **E 04 F 15/12,** C 09 D 5/34,
C 08 L 19/00, C 08 L 75/00

(54) **Mastic pour revêtements élastiques de sols.**

(30) Priorité: 21.02.83 FR 8302762

(43) Date de publication de la demande:
10.10.84 Bulletin 84/41

(45) Mention de la délivrance du brevet:
26.11.86 Bulletin 86/48

(84) Etats contractants désignés:
**BE DE GB IT LU NL**

(56) Documents cité:
**DE-A-1 594 284**
**DE-A-1 921 832**
**DE-A-2 151 174**
**FR-A-1 570 799**
**FR-A-2 439 855**

(73) Titulaire: **ETABLISSEMENTS BOULENGER, 21, rue
Pajol, F-75018 Paris (FR)**

(72) Inventeur: **Berlemont, Jacques, 21, rue Pajol,
F-75018 Paris (FR)**

(74) Mandataire: **Lepeudry- Gautherat, Thérèse,
Armengaud Jeune Cabinet Lepeudry 23
boulevard de Strasbourg, F-75010 Paris (FR)**

EP 0 121 448 B1

LIBER, STOCKHOLM 1986

## Description

La présente invention a pour objet un revêtement de sols notamment élastique destiné, plus particulièrement aux salles d'écoles, salles de sport, ateliers, crèches etc...

On connaît des revêtements de sols réalisés à base de granulés insérés dans un liant, confectionnés directement sur chantier, sur le support à traiter, qui sont appliqués suivant la technique de la "règle", c'est-à-dire en utilisant des cales sur lesquelles on fait glisser une règle afin d'obtenir l'épaisseur souhaitée. Les granulés utilisés sont, notamment, des granulés de caoutchouc naturel ou synthétique, ou de plastique. Le liant utilisé est notamment, une résine polyuréthanne monocomposant adaptée à la dureté des granulés choisis.

Dans ce type de revêtement, une fois appliqué le mélange granulés-liant, il est nécessaire d'effectuer un ponçage d'égalisation. Ce ponçage fait apparaître des trous qu'il est nécessaire de combler par un mastic. Le problème posé est de trouver un mastic suffisamment fluide pour pénétrer entre les granulés, et adhérer ainsi correctement au revêtement, mais en même temps suffisamment visqueux pour ne pas s'effondrer à travers le revêtement et ne plus alors combler les trous de la surface supérieure du revêtement. Un état de la technique correspondant au préambule de la revendication 1 est en outre connu du FR-A-2 439 855.

Pour apporter une solution à ce problème, l'invention a pour objet un revêtement élastique pour sols constitué par une première couche constituée par des granulés de matière caoutchouteuse naturelle ou synthétique ou de matière plastique disposés dans un liant durcissable et par une seconde couche de finition comportant, dans un liant identique à celui de la première couche augmenté d'un solvant et d'un plastifiant, une charge solide constituée par une poudre de matière identique à celle des granulés susdits.

L'invention a également pour objet un procédé pour réaliser, avantageusement le revêtement susdit selon lequel on réalise la première couche susdite, on ponce ladite première couche après durcissage en récupérant le produit du ponçage et l'on incorpore ce produit récupéré en tant que charge de la résine utilisée pour la deuxième couche et l'on applique la composition ainsi obtenue sur la première couche susdite.

D'autres caractéristiques et avantages de l'invention apparaîtront au cours de la description qui suit d'un mode de réalisation donné à titre d'exemple non limitatif en regard des dessins, qui réprésentent :

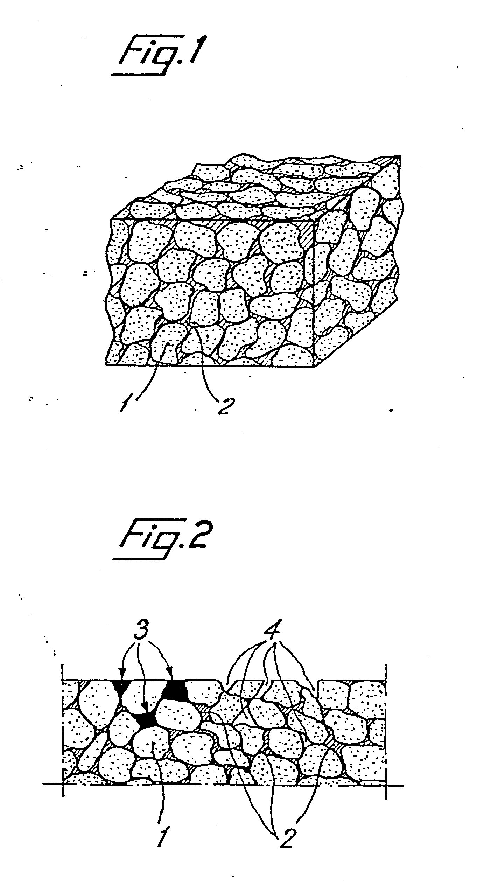

- en figure 1, la couche de base du revêtement de sol selon l'invention,

- en figure 2, un détail agrandi d'une zone de surface de la figure 1 après application et ponçage de la couche de finition.

En se reportant à ces figures on voit que la couche-de base est réalisée de manière connue par des granulés de caoutchouc (1) insérés dans une résine polyuréthanne (2) qui a durci. On constitue ensuite une composition ou un mastic consistant en un mélange de résine polyuréthanne, de poudre de la même matière que les granulés du revêtement, de plastifiant (par exemple phtalate d'octyle) et de solvant (par exemple méthyléthylcétone). Le mastic (3) ainsi préparé sera appliqué à l'aide d'une raclette sur le revêtement, et viendra remplir les trous (4) pouvant exister. Après durcissement, ce mastic constituera la couche de finition susdite.

L'intérêt du solvant, outre de permettre un réglage de la fluidité du mastic, évite le "bullage", c'est-à-dire l'apparition de bulles à la surface du mastic. En effet, la polymérisation du prépolymère constituant la résine s'accompagne d'un dégagement de gaz carbonique $CO_2$, qui doit pouvoir s'évacuer sans être inclus, sous peine de voir se former des bulles.

Le plastifiant, permet, également, de régler la viscosité du mastic.

Suivant un mode de réalisation avantageux de l'invention, le mélange utilisé pour la confection du mastic comprend en poids, pour 100 parts de résine, 60 parts de solvant et plastifiant et 70 parts de poudre dans le cas de revêtement à gros grains, et comprend 27 parts de plastifiant et de solvant, pour 35 parts de poudre dans le cas de revêtements à petits grains.

-Suivant un autre mode de réalisation de l'invention,le mastic destiné à recouvrir un revêtement composé de granulés de plastique insérés dans une résine, sera obtenu par mélange de résine, de poudre provenant d'une matière plastique analogue à celle des granulés, de plastifiant et de solvant, la résine, le plastifiant et le solvant étant adaptés à la nature de la matière plastique.

Après application du mastic, ce dernier sera avantageusement poncé à l'aide de ponceuses à ruban, ce qui permet d'enlever facilement le surplus de mastic recouvrant les grains.

De même que les revêtements concernés peuvent présenter des coloris variés par l'utilisation de granulés de différentes couleurs, le mastic peut lui aussi offrir, plusieurs teintes. En utilisant pour sa confection la poudre résultant du ponçage du revêtement à mastiquer, le mastic sera de même teinte que le revêtement. Mais il pourra aussi être de teinte différente, en utilisant des poudres provenant, notamment, des opérations de granulation nécessaires à la fabrication des revêtements eux-mêmes, et qui offrent toute une gamme de coloris.

Selon l'invention, la teinte finale du revêtement élastique sera plus soutenue que celle obtenue par les granulés, et son aspect sera plus brillant, si l'on incorpore un colorant, lors dela confection du mastic.

Dans le cas particulier des revêtements élastiques d'ateliers, où une résistance aux solvants, huiles et essence est nécessaire, on utilisera, lors de la confection du mastic, une résine époxy en remplacement de la résine polyuréthanne. Un autre cas particulier prohibe l'utilisation de solvants. C'est ainsi que la résine polyuréthanne monocomposant sera remplacée soit par une résine bicomposant (isocyanate et polyol et/ou polyester) soit par une résine en émulsion.

Un procédé particulièrement avantageux de réalisation du revêtement selon l'invention réside en ce qu'après avoir réalisé la première couche susdite, on la ponce en recueillant le produit de ponçage obtenu qui est une poudre de caoutchouc et de résine durcie et l'on incorpore cette poudre, dans les proportions susdites, dans la résine préparée pour la seconde couche. On aura au préalable tamisé ce produit de ponçage pour obtenir une granulométrie de la poudre telle que les dimensions des particules à incorporer ne soient pas supérieures à 0,45 millimètres. Ce procédé permet de réaliser des revêtements de manière économique en supprimant le stockage et le transport de la poudre nécessaire à la seconde composition.

L'invention trouve une application intéressante dans le domaine de la construction et du bâtiment.

## Revendications

1.- Revêtement de sol élastique constitué par une première couche d'une composition durcissable comprenant dans un liant (2) à base de résine, des granulés (1) de matière caoutchouteuse naturelle ou synthétique ou de matière plastique, et par une couche de finition (3) caractérisé en ce que la composition de la couche de finition (3) comprend un liant (2) identique à celui de la premiere couche, augmenté d'un solvant et d'un plastifiant, et une charge solide constituée par une poudre de matière identique à celle des granulés (1) susdits.

2.- Revêtement selon la revendication 1, caractérisé en ce que le liant susdit est une résine polyuréthanne monocomposant tandis que le plastifiant est un phtalate d'octyle et le solvant une méthyléthylcétone.

3.- Revêtement selon la revendication 1 ou la revendication 2, caractérisé en ce que le mélange de la seconde composition comprend en poids, pour 100 parts de résine, environ 60 parts de plastifiant et solvant et environ 70 parts de poudre dans le cas de revêtements à gros grains, et comprend environ 27 parts de plastifiant et de solvant, pour environ 35 parts de poudre dans le cas de revêtements a petits grains.

4.- Procédé de réalisation du revêtement selon la revendication 1, caractérisé en ce qu'on applique la première couche susdite, on lui fait subir un ponçage après durcissement en récupérant le produit de ponçage que l'on incorpore à titre de charge dans la résine de ladite seconde couche avant son application sur ladite première couche poncée.

5- Procédé selon la revendication 4, caractérisé en ce que l'on tamise le produit de ponçage.

## Patentansprüche

1. Elastische Bodenbeschichtung, bestehend aus einer ersten Schicht aus einer aushärtbaren Zusammensetzung, die in einem Bindemittel (2) auf Harzbasis ein Granulat (1) aus natürlicher oder synthetischer Kautschukmasse oder aus Kunststoff enthält, und aus einer Endschicht (3), dadurch gekennzeichnet, daß die Zusammensetzung der Endschicht (3) ein Bindemittel (2) enthält, das mit dem der ersten Schicht identisch und mit einem Lösungsmittel und einem Weichmacher versetzt ist, sowie eine feste Charge, die aus dem Pulver eines Materials besteht, das mit dem dieses Granulats (1) identisch ist.

2. Beschichtung nach Anspruch 1, dadurch gekennzeichnet, daß dieses Bindemittel ein Polyurethan-Einkomponentenharz ist, während der Weichmacher Octylphthalat und das Lösungsmittel Methylethylketon ist.

3. Beschichtung nach Anspruch 1 oder 2, dadurch gekennzeichnet, daß in dem zweiten Zusammensetzungsgemenge, bezogen auf das Gewicht, auf 100 Teile Harz etwa 60 Teile Weichmacher und Lösungsmittel und etwa 70 Teile Pulver enthalten sind im Falle von Beschichtungen aus grobem Granulat, und etwa 27 Teile Weichmacher und Lösungsmittel bei etwa 35 Teilen Pulver enthalten sind im Falle von Beschichtungen aus feinem Granulat.

4. Verfahren zur Herstellung einer Beschichtung gemäß Anspruch 1, dadurch gekenntzeichnet, daß man diese erste Schicht aufbringt und nach dem Durchhärten einem Schliff unterwirft, wobei man das Schleifpulver gewinnt, welches man als feste Charge in das Harz dieser zweiten Schicht einarbeitet, bevor man diese auf diese erste, geschliffene Schicht aufbringt.

5. Verfahren nach Anspruch 4, dadurch gekennzeichnet, daß man dieses Schleifpulver siebt.

## Claims

1. Elastic floor covering consisting of a first layer of a curable composition comprising, in a resinbased binder (2), granules (1) of a natural or synthetic rubbery material or of plastic material, and consisting of a finishing layer (3), characterized in that the composition of the finishing layer (3) comprises a binder (2) identical to that of the first layer, supplemented by a solvent and a plasticizer, and a solid filler consisting of a powder of a material identical to that of the abovementioned granules (1).

2. Covering according to Claim 1, characterized in that the abovementioned binder is a single-component polyurethane resin, while the plasticizer is an octyl phthalate and the solvent a methyl ethyl ketone.

3. Covering according to Claim 1 or Claim 2, characterized in that the mixture of the second composition comprises by weight, per 100 parts of resin, approximately 60 parts of plasticizer and solvent and approximately 70 parts of powder in the case of coarse-grained coverings, and comprises approximately 27 parts of plasticizer and solvent, for approximately 35 parts of powder in the case of fine-grained coverings.

4. Process for producing the covering according to Claim 1, characterized in that the abovementioned first layer is applied, and is subjected to a sanding operation after curing, the sanding product being recovered and incorporated as a filler in the resin of the said second layer before it is applied to the said first sanded layer.

5. Process according to Claim 4, characterized in that the sanding product is screened.

_Fig.1_

_Fig.2_